# EUROPEAN PATENT APPLICATION

(11) **EP 4 783 657 A1**
(43) Date of publication of application: **29.07.2026**
(21) Application number: 26153541.3
(22) Date of filing: 22.01.2026
(51) Int. Cl.: H04W 24/10, H04B 7/185, H04W 84/06

(54) **METHOD AND USER EQUIPMENT IN NON-TERRESTRIAL NETWORK**

(30) Priority: 24.01.2025 US 202563748995 P; 15.01.2026 US 202619449432
(71) Applicant: Industrial Technology Research Institute, 310401 Hsinchu (TW)
(72) Inventor: Cheng, Ching-Wen, 308003 Baoshan Township, Hsinchu County (TW)
(74) Representative: Becker Kurig & Partner Patentanwälte mbB

(57) **Abstract**

A method and a user equipment, UE, (1100) served by a serving node in a Non-Terrestrial Network, NTN, are provided. In the method, a measurement configuration is received, and one or more target SSB measurement timing configurations, SMTCs, from multiple SMTCs are selected. The measurement configuration includes the multiple SMTCs.

## Description

### TECHNICAL FIELD

The present disclosure relates to wireless communication technology, and more particularly, to a method and a user equipment in a non-terrestrial network.

### BACKGROUND

With the rapid evolution of wireless communication technologies, Non-Terrestrial Networks (NTN) have emerged to extend network coverage to regions where terrestrial networks are unavailable or insufficient. In an NTN, a radio access network node or function may be embarked on board a satellite to provide radio access services to User Equipment (UE) located on the ground.

To enhance downlink coverage and manage power efficiency, satellites often employ beam hopping or beamforming techniques. Unlike terrestrial base stations, where coverage is relatively static, satellite beams may move rapidly relative to the ground or may be activated sequentially in different areas (i.e., not all beams are active simultaneously). This dynamic nature of satellite beams results in variations in the transmission of reference signals, such as Synchronization Signal Blocks (SSBs). For instance, the periodicity of the SSBs may be extended (e.g., beyond the standard 20ms), and the arrival timing of signals from neighbor cells may differ significantly from that of a serving cell due to large propagation delays and satellite movement.

A SMTC defines a measurement window characterized by a periodicity, an offset, and a duration. The network configures a SMTC to facilitate measurements of cells. A UE is not required to perform SSB measurements beyond the SMTC duration, to reduce the power consumption.

However, the deployment of Non-Terrestrial Networks (NTN) introduces significant complexities. Satellites serving as the vehicle of network nodes/functions to provide radio access services may employ beam hopping to enhance downlink coverage and manage satellite power. Consequently, satellite beams may not all be simultaneously active, and the periodicity of reference signals transmitted may be affected by the active/inactive status of satellite beams.

### SUMMARY

An embodiment of the disclosure provides one or more methods and User Equipments (UE) in a Non-Terrestrial Network (NTN).

According to one or more embodiments of the disclosure, a method used by a UE for implementing NTN mobility and a UE using the same method. A measurement configuration is received by a NTN capable UE (i.e., a UE implementing NTN functions and procedures, including measurements and mobilities), where the measurement configuration includes multiple Synchronization Signal Block Measurement Timing Configurations (SMTCs) for supporting the measurements and mobility functions and procedures of NTN. One or more target SMTCs are selected from the SMTCs by the UE for measurements or mobility of NTN.

According to one or more embodiments of the disclosure, a UE is served by a radio access node of an NTN, wherein the radio access node of an NTN is the serving node of the UE. The UE includes a transceiver and a processor. The processor is coupled to the transceiver. The processor is configured to perform: receiving, through the transceiver, a measurement configuration, and selecting one or more target SMTCs from multiple SMTCs for measurements of cells of the NTN. The measurement configuration includes multiple SMTCs.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram illustrating a communication system according to an embodiment of the present disclosure.
FIG. 2 is a flowchart illustrating a method used by a UE in an NTN according to an embodiment of the present disclosure.
FIG. 3 is a schematic timing diagram illustrating a time-based SMTC selection mechanism according to an embodiment of the present disclosure.
FIG. 4 is a flowchart illustrating a UE applying time-based SMTC for intra-frequency cell reselection according to an embodiment of the present disclosure.
FIG. 5 is a flowchart illustrating a UE applying time-based SMTC for inter-frequency cell reselection according to an embodiment of the present disclosure.
FIG. 6 is a schematic diagram illustrating the cells configured with a SMTC cluster according to an embodiment of the present disclosure.
FIG. 7 is a flowchart illustrating a UE applying location-based SMTC with a distance threshold for intra-frequency cell reselection according to an embodiment of the present disclosure.
FIG. 8 is a flowchart illustrating a UE applying location-based SMTC without a distance threshold for intra-frequency cell reselection according to an embodiment of the present disclosure.
FIG. 9 is a flowchart illustrating a UE applying location-based SMTC with a distance threshold for inter-frequency cell reselection according to an embodiment of the present disclosure.
FIG. 10 is a flowchart illustrating a UE applying location-based SMTC without a distance threshold for inter-frequency cell reselection according to an embodiment of the present disclosure.
FIG. 11 is a block diagram that illustrates a communication device according to an embodiment of the present disclosure.

### DESCRIPTION OF THE EMBODIMENTS

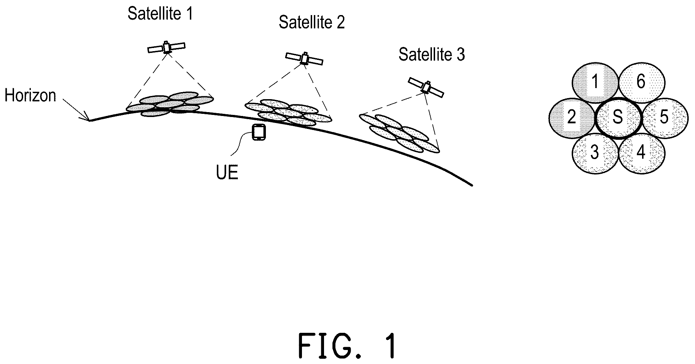

FIG. 1 is a schematic diagram illustrating a communication system according to an embodiment of the present disclosure. Referring to FIG. 1, distinct satellites (e.g., Satellite 1, Satellite 2, and Satellite 3) move relative to the UE on the ground. Each satellite may have a different orbital parameter and serve different cells (e.g., Satellite 1 serving Neighbor Cells 1 and 2; Satellite 2 serving the Serving Cell; Satellite 3 serving Neighbor Cell 6). This dynamic topology leads to "Time Domain Spreading" of the reference signals with different SMTC offset values. For example, Satellite 1 may operate with a 40 ms SSB periodicity, Satellite 2 with an 80 ms periodicity, and Satellite 3 with a 160 ms periodicity. Consequently, the SSBs from Cell 1 (served by Satellite 1) arrive at an "offset 1", while SSBs from Cell 6 (served by Satellite 3) arrive at a significantly different "offset 2". As shown, a single SMTC cannot capture these widely dispersed signals. To assist UE to detect neighbor cells, the network may configure multiple distinct SMTCs. However, the number of required SMTCs may exceed the UE's capability (e.g., supported number of SMTCs), leading to potential measurement misinterpretation or inefficient power consumption if the UE attempts to monitor all configured SMTCs without discrimination. Therefore, the conventional mechanism is considered to be further improved.

Please refer to FIG. 1. A communication system includes, but the disclosure is not limited thereto, a User Equipment (UE) and one or more satellites (e.g., Satellite 1, Satellite 2, and Satellite 3) serving as radio access network nodes in a Non-Terrestrial Network (NTN). The UE may be located on the ground (Horizon) and communicates with or via the NTN payloads embarked on satellites. The UE is served by a serving cell. The satellites move relative to the UE along a satellite moving direction. Each satellite may serve one or more cells. For example, as shown in FIG. 1, Satellite 2 serves a serving cell and Cell 5. Satellite 1 serves Cells 1, 2, and 6. Satellite 3 serves Cells 3 and 4. The UE may be configured to perform measurements on the cells of the NTN.

In some embodiments, the satellite served as the vehicle to convey a portion or the entire functions of a base station (e.g., a gNB) which is a network device that provides the UE with communication services in a beamforming manner. Non-terrestrial networks (NTNs) generally use satellite communication to provide ground users with communication services and have many advantages compared with terrestrial communications (e.g., cellular networks). In an exemplary deployment, to provide effective communication performance, NTN technology may use beamforming to provide the users with services. In the beamforming manner, a signal processing technology uses an antenna array or a smart antenna to transmit and receive signals in one or more specific directions.

The network devices may provide communication service within their coverage, respectively. To ensure the coverage of the satellite on the earth and increase the system capacity of the entire satellite communication system, the satellite uses multiple beams to cover the ground in a beamforming manner. That is, a single satellite can form multiple beams to cover the ground, and each beam may cover a ground area. Taking FIG. 1 as an example, the Satellite 2 has m beams, where m is a positive integer larger than 1.

The UE may be, but is not limited to, a mobile station, a mobile terminal or device, an NTN terminal, a data terminal equipment (DTE), a fixed wireless access (FWA) UE, a machine-type communication (MTC) device, a vehicle-to-everything (V2X) UE, or a user communication radio terminal. For example, the UE may be a portable radio equipment, which includes, but is not limited to, a mobile phone, a tablet, a wearable device, a sensor, or a vehicle. The UE is configured to receive and transmit signals over an air interface to one or more cells in a radio access network. In some embodiments, the UE and the network device (e.g., Satellite 2) are connected in communication through a satellite service link, and the satellite service link refers to a radio link between the UE and the network device. In some embodiments, the UE may also support a wireless communication connection with a terrestrial access network.

It should be noted that only one UE included in the implementation environment is illustrated, and in another embodiment, multiple UEs may be further included in the implementation environment, but the embodiments of the application are not limited thereto. In addition, it should be noted that the number of satellites in the implementation environment may be plural.

In some embodiments, the network device could be a base station (BS) such as a node B (NB) as in the UMTS, an evolved node B (eNB) as in the LTE or LTE-A, a next-generation Node B (gNB) as in the 5G Access Network (5G-AN), remote radio head/unit (RRH/RRU), baseband unit (BBU), C-RAN, integrated access and backhaul (IAB) Nodes, small cells (e.g., femtocell, picocell, or/and microcell), and any other apparatus capable of controlling radio communication and managing radio resources within a cell.

It should be understood that the terms "system" and "network" used in the present disclosure are often used interchangeably. The term "and/or" in the present disclosure is only an association relationship describing the associated objects, which means that there can be three kinds of relationships, for example, A and/or B, which can mean three situations: A is present alone, A and B are present simultaneously, or B is present alone. In addition, the character "/" in the disclosure generally indicates that the associated objects are in an "or" relationship.

To facilitate understanding of the technical solutions of the embodiments of the disclosure, the technical concepts related to the embodiments of the disclosure are described below.

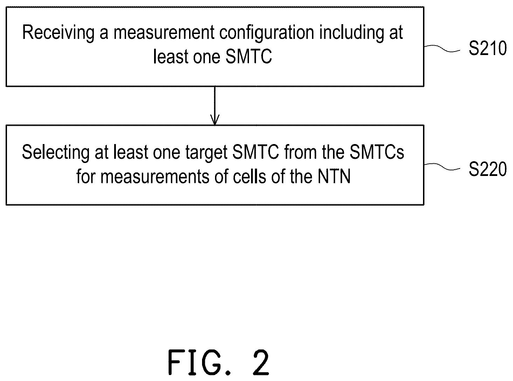

FIG. 2 is a flowchart illustrating a method used by a UE in an NTN according to an embodiment of the present disclosure. The method may be performed by the UE as shown in FIG. 1. Please refer to FIG. 2, in step S210, a UE receives a measurement configuration including at least one SSB Measurement Timing Configuration (SMTC). More specifically, the UE receives the measurement configuration from the serving node (e.g., the radio access network functions and procedures embarked on Satellite 2 in FIG. 1). The measurement configuration is a set of parameters configured by the network to assist the UE to perform measurements on reference signals (e.g., Synchronization Signal Blocks, SSBs) of cells of NTN.

In some embodiments, to relax the measurements of reference signals or to adapt to the dynamic characteristics of the NTN (such as different SMTC offset values according to satellite beam hopping and movement, or different SMTC periodicities in a frequency), the measurement configuration includes one or more SMTCs. The SMTC is defined as a measurement window configuration used by the UE to measure one or more reference signals (e.g., Synchronization Signal Blocks, SSBs) of cells of NTN. The SMTC may include parameters, including a SMTC periodicity, a SMTC offset, and/ or a SMTC duration. More specifically, the SMTC periodicity indicates a repetition interval of the measurement window (e.g., 20 ms, 40 ms, 80 ms, or 160 ms). The SMTC offset indicates a start timing of the measurement window relative to a reference timing (e.g., a system frame number of a serving cell). The SMTC duration indicates the length of the measurement window (e.g., 1 ms to 5 ms). The foregoing descriptions of SMTC periodicity, SMTC offset, and SMTC duration are provided merely for illustration. The present disclosure is not limited thereto.

In some embodiments, one or more SMTCs included in the measurement configuration may be organized as one or more SMTC clusters (or SMTC sets). Each SMTC cluster corresponds to a group of one or more cells of NTN (e.g., cells served by the same satellite) and is associated with one or more NTN cell IDs (e.g., a Physical Cell Identity, PCI).

In some embodiments, each SMTC cluster may include at least one of a SMTC offset, a SMTC periodicity, or a SMTC duration.

In some embodiments, each SMTC cluster may include a Physical Cell Identity (PCI) list. The PCI list may consist of at least one PCI, and each PCI presents the ID of a NTN cell associated with the corresponding SMTC cluster. The UE could perform measurements of a NTN cell with the PCI included in a SMTC cluster of the measurement configuration received from the network by applying the SMTC offset, SMTC periodicity, and SMTC duration configured by the associated SMTC cluster.

In some embodiments, the UE may receive a System Information (SI) broadcast and/ or a UE specific Radio Resource Control (RRC) message containing the measurement configuration. The SI broadcast may be, for example, SIB2 for intra-frequency measurements or SIB4 for inter-frequency measurements of one or more NTN cells. The UE-specific RRC message may be, for example, a *RRCRelease* or a *RRCReconfiguration* message.

Please refer back to FIG. 2, in step S220, the UE selects at least one target SMTC from one or more SMTCs provided by the measurement configuration for measurements of one or more cells of the NTN. To take account of the reference signals of neighboring NTN cells served by different satellites, the number of configured SMTCs in the NTN may exceed the capability of the UE (e.g., the UE may be capable of supporting 2 SMTCs for cell measurements per frequency). When the number of configured SMTCs exceeds the capability of a UE, the UE performs a selection procedure to determine which SMTCs are currently applicable. In some cases, for example, the number of SMTCs configured by the network may exceed the capability of the UE (e.g., the UE may be capable of supporting 2 SMTCs for cell measurements per frequency), the UE may perform a selection procedure of at least one target SMTC. However, the selection procedure is not limited to scenarios where the number of configured SMTCs exceeds the capability of the UE. Even if the UE has sufficient capability to support all configured SMTCs, the selection procedure prevents the UE from performing invalid measurements.

In some embodiments, each SMTC or SMTC cluster may be associated with a validity condition (or trigger condition). The validity condition includes specific criteria used by the UE to determine whether the associated SMTC is currently applicable for the measurements of cells of the NTN. The UE may select one or more target SMTCs based on a comparison between the validity condition of each SMTC and a current status of the UE. When or only when the validity condition is satisfied based on the current status of the UE, the UE may determine that the corresponding SMTC is valid and may further select it as the target SMTC. On the other hand, when or only when the validity condition is not satisfied based on the current status of the UE, the UE may determine that the corresponding SMTC is invalid and is excluded from the target SMTC.

In some embodiments, the validity condition may include reference time information to indicate the time from which at least one of the SMTCs is applicable. Correspondingly, the current status of the UE may include a current time (e.g., a System Frame Number (SFN), a subframe number, a slot index, a symbol index, a Coordinated Universal Time (UTC) time which is a value in UTC format, or a Network Time Protocol (NTP) time which is a value in NTP format) of the UE. The UE compares the current time with the reference time information to determine the validity of the SMTC.

In some embodiments, the reference time information may include a starting time associated with one SMTC included in the measurement configuration. The starting time indicates the time from which the associated SMTC becomes applicable to a UE served by the serving node (e.g., from the time the satellite serving the NTN cell(s) associated with the SMTC would be considered as starting to serve the area the UE is located). In one case, a UE may select at least one SMTC as the target SMTC based on the comparison between the current time of the UE and the starting time associated with the SMTC. For example, if the current time of the UE is equal to or later than the starting time associated with one SMTC, this SMTC may be selected as the target SMTC by the UE. For example, if the current time of the UE is equal to or later than the starting time associated with a SMTC, the SMTC is considered as applicable to the UE and may be selected as the target SMTC by the UE. For example, if the current time of the UE is earlier than the starting time associated with a SMTC, the SMTC is considered as not applicable to the UE and would not be selected as the target SMTC by the UE.

In some embodiments, the reference time information may include a stopping time associated with one SMTC included in the measurement configuration. The stopping time indicates the time from which the SMTC turns to be not applicable to a UE served by the serving node (e.g., from the time the satellite serving the NTN cell(s) associated with the SMTC would be considered as stopping serving the area the UE is located). In one case, a UE may disable selecting or exclude one SMTC as the target SMTC based on the comparison between the current time of the UE and the stopping time. For example, if the current time of the UE reaches or exceeds the stopping time associated with one SMTC, the UE would consider the SMTC as inapplicable to the UE and would not select the SMTC as the target SMTC. A UE may further stop applying or release a SMTC when the SMTC is considered as inapplicable to the UE.

In some embodiments, the reference time information may include an applicable duration associated with one SMTC included in the measurement configuration. The applicable duration indicates a period of time during which the SMTC is applicable to a UE served by the serving node (e.g., during the period of time the satellite serving the NTN cell(s) associated with the SMTC would be considered as serving the area the UE is located). In one case, a UE may select the one SMTC as the target SMTC based on the comparison between the current time of the UE and the applicable duration. For example, the SMTC is considered as valid or applicable only if the current time of the UE falls within the duration starting from a specific reference point of time (e.g., the starting time).

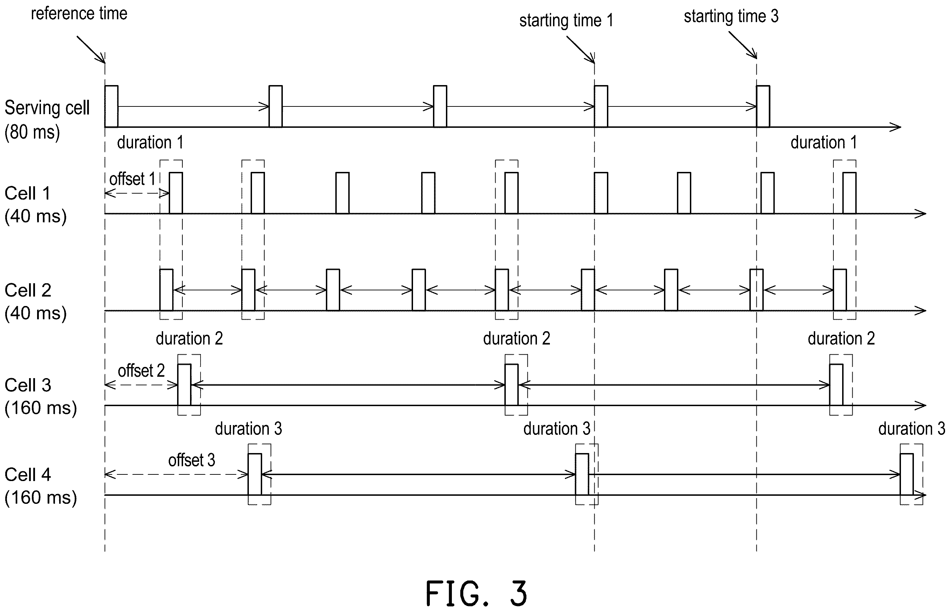

To further illustrate the time-based selection mechanism, FIG. 3 is an exemplary schematic timing diagram illustrating a time-based SMTC selection mechanism according to an embodiment of the present disclosure. Please refer to FIG. 3, a scenario involves multiple satellites serving an area over time. A Serving cell is served by Satellite 2 and is associated with a SMTC periodicity (e.g., 80 ms). Satellite 1 provides services to cell 1 and cell 2. The cell 1 and cell 2 may be associated with a SMTC periodicity (e.g., 40 ms). Satellite 3 provides service to cell 3 and cell 4. The cell 3 and cell 4 may be associated with a SMTC periodicity (e.g., 160 ms). The network configures a first SMTC associated with cell 1 and cell 2 (e.g., cells served by Satellite 1 may be configured with the same value(s) of SMTC parameter(s)) and a second SMTC associated with cell 3 and cell 4 (e.g., cells served by Satellite 3 may be configured with the same value(s) of SMTC parameter(s)).

For example, the first SMTC may further be associated with a stopping time. When the current time of the UE passes the stopping time associated with the first SMTC, the UE disables selecting the first SMTC (i.e., the UE considers the first SMTC as inapplicable to the UE). If a UE is applying the first SMTC for cell measurements, the UE may stop applying the first SMTC, and may further release it.

For another example, the second SMTC is associated with a starting time (indicated as "starting time 3" in FIG. 3). When the current time of the UE reaches the starting time, the UE considers the second SMTC as applicable to the UE and may select the second SMTC as the at least one target SMTC for the UE to apply for measurements and performs measurements of cell 3 and cell 4. By utilizing the reference time information (e.g., starting time or stopping time), the UE could manage the measurement resources to align with the measurement configuration and UE capability.

In some embodiments, each time-based SMTC element may indicate an associated *startingTime* to indicate the time of applying the SMTC element. Wherein a time-based SMTC element is a SMTC of the at least one SMTC included in the measurement configuration provided by the serving network node of the UE, or is a SMTC cluster of the at least one SMTC cluster included in the measurement configuration provided by the serving network node of the UE. In some embodiments, each time-based SMTC element may be associated with a *stoppingTime* to indicate the time at which a UE could consider the time-based SMTC element becomes inapplicable and stop applying the SMTC element.

In some embodiments, each time-based SMTC element may be associated with a SMTC periodicity for evaluating associated SMTC occasions that a UE would perform measurements of cells by applying the time-based SMTC element. In some embodiments, the value of SMTC periodicity may be indicated by the time-based SMTC element. In some embodiments, the value of SMTC periodicity associated with the time-based SMTC element may be considered the same as the SSB periodicity of the serving cell of the UE (i.e., the cell provided/transmitted the time-based SMTC to the UE) if the value of SMTC periodicity is not indicated by the time-based SMTC element. In some embodiments, the value of SMTC periodicity associated with the time-based SMTC element may be considered the same as the SMTC periodicity of the serving cell of the UE if the value of SMTC periodicity is not indicated by the time-based SMTC element. In some embodiments, the value of SMTC periodicity may be considered the same as the SMTC periodicity of the SMTC element one ahead of the time-based SMTC element in the at least one SMTC cluster included in the measurement configuration if the value of SMTC periodicity is not indicated by the time-based SMTC element. In some embodiments, the value of SMTC periodicity may be considered the same as the SMTC periodicity of the first SMTC element of the at least one SMTC cluster included in the measurement configuration if the value of SMTC periodicity is not indicated by the time-based SMTC element.

In some embodiments, each time-based SMTC element may include a list of PCI (i.e., PCI list), where the list of PCI consists of at least one PCI. For example, it is assumed that a time-based SMTC element associated with a satellite, each PCI of the list of PCI is associated with a cell served by the satellite. That is, all the PCI of the list of PCI could be considered as served by the same satellite.

In some embodiments, if a list of PCI is not indicated by the time-based SMTC element, or the PCI of the cell is not included in the list of PCI of the frequency associated with the time-based SMTC element, if a list of PCI is included in the list of PCI of a time-based SMTC element for intra-frequency measurements (i.e., for the measurements of a cell in the NTN operated on the frequency same as the serving cell of the UE) but a detected PCI is not included in the list of PCI , it is considered for the UE to apply the values of the parameters of the ntn-Config Information Elements (i.e., including applying the ephemerous, epoch time, common timing advance parameters, etc.) associated with the serving cell for the evaluation and adjustments of the related parameter values for the NTN cell identified by the PCI; if a list of PCI is included in the list of PCI of a time-based SMTC element for inter-frequency measurements (i.e., for the measurements of a cell in the NTN operated on the frequency different from the serving cell of the UE) but a detected PCI is not included in the list of PCI, , it is considered for the UE to apply the values of the parameters of the ntn-Config Information Elements associated with the detected PCI as indicated in SIB19 for the evaluation and adjustments of the related parameter values for the NTN cell identified by the PCI. In some embodiments, if the detected PCI of a cell is not indicated in SIB19, one of the following applies:
the ntn-Config to be applied is the first intra-frequency element of the neighbour cell configuration (e.g., ntn-NeighbourCellConfigList) indicated in SIB19, i.e., the values of the parameters of the ntn-Config Information Elements associated with the first intra-frequency element of the neighbour cell configuration (e.g., ntn-NeighbourCellConfigList) indicated in SIB19 are applied; or
the ntn-Config to be applied is the ntn-Config associated with the previous intra-frequency cell that the previous intra-frequency cell is the cell operated on the same frequency with the detected PCI and is detected before the detected PCI and the PCI of the previous intra-frequency cell is indicated in SIB19; or
the ntn-Config to be applied is the ntn-Config associated with a second cell that the second cell is the latest detected intra-frequency cell and the PCI of the second cell is indicated in SIB19.

An example for the network to organize the information to be provided in the measurement configuration to UE to support the time-based SMTC selection mechanism described above may include the structure of a SMTC cluster. For example, the SMTC cluster (*smtc-Cluster*) includes parameters, including a starting time (*startingTime)*, a stopping time (*stoppingTime*)*,* a SMTC periodicity (*periodicity*)*,* a SMTC offset (*offset*)*,* a SMTC duration (*duration*)*,* and a Physical Cell Identity list (*pci-List*)*.* The starting time and the stopping time are configured using a time mark (*TimeMark*)*.* The time mark includes a System Frame Number (*sfn*) and a Sub-frame Number (*subFrameNR*)*.* The System Frame Number indicates a specific radio frame (e.g., integer 0 to 1023). The Sub-frame Number indicates a specific sub-frame within the radio frame (e.g., integer 0 to 9). The SMTC periodicity is an enumerated value (e.g., 20 ms, 40 ms, 80 ms, 160 ms). The *pci-List* comprises a sequence of one or more Physical Cell Identities (PCIs) associated with the SMTC cluster.

It should be noted that the parameters within the SMTC cluster may be optional. For example, the SMTC cluster may include only the starting time without the stopping time, or vice versa. When the SMTC periodicity is not explicitly indicated in the SMTC cluster, a default value (e.g., the SSB periodicity of the serving cell) is applied. Similarly, when the *pci-List* is not indicated, or if a detected cell has a PCI not included in the list, the UE applies exception handling mechanisms (e.g., assuming the cell belongs to the same satellite as the serving cell). This data structure is applicable to various measurement scenarios, including an intra-frequency cell reselection and an inter-frequency measurement, which will be described in detail later.

In some embodiments, the UE may perform the measurements of the cells of the NTN according to one or more target SMTCs. More specifically, after selecting the applicable SMTC(s), the UE configures its radio frequency (RF) circuitry to monitor reference signals (e.g., SSBs) transmitted from NTN cells (e.g., Cells 1, 3, 4, 6 in FIG. 1) based on the parameters (e.g., SMTC periodicity, offset, duration) defined in the selected target SMTC. The UE may perform cell measurements (e.g., to evaluate RSRP/RSRQ of the reference signals) or cell reselection based on the measurement results.

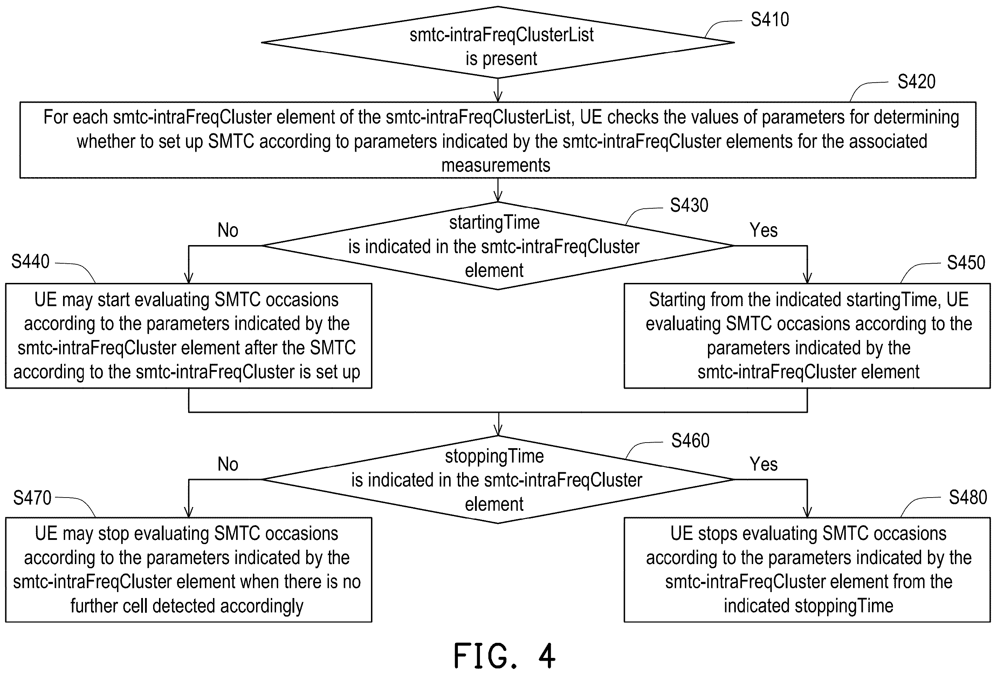

FIG. 4 is an exemplary flowchart illustrating a UE applying a time-based SMTC mechanism for intra-frequency measurements according to an embodiment of the present disclosure. The method may be applicable to a UE in an RRC_IDLE, RRC_INACTIVE, or RRC_CONNECTED state performing measurements of cells in NTN.

Please refer to FIG. 4, in step S410, the UE determines whether a *smtc-intraFreqClusterList* is present, wherein the smtc-intraFreqClusterList is configured in the measurement configuration to provide the at least one SMTC or SMTC clusters for intra-frequency measurements of cell(s) in the NTN. For example, the UE may check the system information (e.g., SIB2) provided by the serving cell; if the *smtc-intraFreqClusterList* is present in the system information, the UE proceeds to check each smtc-intraFreqCluster element within the list to determine whether to apply the smtc-intraFreqCluster element for measurements of NTN cells. In another example, the UE may check the stored measurement configuration; if the *smtc-intraFreqClusterList* is present in the stored measurement configuration, the UE proceeds to check each smtc-intraFreqCluster element within the list to determine whether to apply the smtc-intraFreqCluster element for measurements of NTN cells.

The UE may select at least one valid smtc-intraFreqCluster element from the smtc-intraFreqClusterList as selected SMTC/SMTC cluster element. In some cases, the number of smtc-intraFreqCluster elements configured by the measurement configuration does not exceed the capability of a UE, the UE may select each smtc-intraFreqCluster element included in the smtc-intraFreqClusterList as the selected SMTC/SMTC Cluster element. In some cases, the number of SMTC clusters included in the measurement configuration exceeds the capability of a UE, for each *smtc-intraFreqCluster* element of the *smtc-intraFreqClusterList,* the UE checks the values of parameters for determining whether to select a *smtc-intraFreqCluster* element as the selected SMTC/SMTC Cluster element for performing the measurements of NTN cells. If at least one of the startingTime, stoppingTime, or duration associated with a smtc-intraFreqCluster element is present, the determination of selecting a *smtc-intraFreqCluser* element would be performed to select at least one selected SMTC according to at least one of the startingTime, stoppingTime, or duration associated with the *smtc-intraFreqCluster* element. If none of the startingTime, stoppingTime, or duration associated with a smtc-intraFreqCluster element is present, the determination of selecting a smtc-intraFreqCluster element could be performed by the UE implementation.

The UE may select at least one valid smtc-intraFreqCluster element as the selected SMTC/SMTC Cluster element. The UE would apply the parameters indicated by the selected SMTC/SMTC Cluster element to set up a SMTC (i.e., to reserve measurement resources for NTN cell measurements that could comply with the parameter values configured by the selected SMTC) for the measurements of NTN cells. In some cases, when the startingTime associated with a smtc-intraFreqCluster element is earlier than the current time of the UE, the smtc-intraFreqCluster element could be considered as valid (i.e., a valid smtc-intraFreqCluster element of the UE). In some cases, when the stoppingTime associated with a smtc-intraFreqCluster element is later than the current time of the UE, the smtc-intraFreqCluster element could be considered as a valid smtc-intraFreqCluster element of the UE. In some cases, when the current time of the UE is within the duration after the startingTime associated with a smtc-intraFreqCluster element, the smtc-intraFreqCluster element could be considered as a valid smtc-intraFreqCluster element of the UE.

In step S420, for each selected SMTC/SMTC Cluster element of the *smtc-intraFreqClusterList,* the UE checks the values of parameters for determining whether to set up an associated SMTC. The determination is performed according to parameters indicated by the *smtc-intraFreqCluster* element, such as the startingTime, the stoppingTime, the periodicity, offset, and duration of the *smtc-intraFreqClusterList* for the associated measurements of NTN cells. In step S430, the UE determines whether a startingTime is indicated in the selected SMTC/SMTC Cluster element.

In step S440, if the *startingTime* is not indicated in the selected SMTC, the UE may apply the values of the parameters associated with the selected SMTC/SMTC Cluster element to set up a SMTC and to evaluate the SMTC occasions and may start performing measurements according to the SMTC.

In step S450, if the startingTime is indicated in the selected SMTC/SMTC Cluster element, starting from the indicated *startingTime,* the UE evaluates SMTC occasions according to the parameters indicated by the *smtc-intraFreqCluster* element and performs measurements of NTN cells according to the values of the parameters indicated by the selected SMTC/SMTC Cluster element after the associated SMTC is set up.

In step S460, the UE determines whether a *stoppingTime* is indicated in the selected SMTC/SMTC Cluster element.

In step S470, if the *stoppingTime* is not indicatedin the selected SMTC/SMTC Cluster element, a UE may determine to stop applying a selected SMTC/SMTC Cluster element for the measurements of NTN cells, e.g., when there is no any cell is detected according to the selected SMTC/SMTC Cluster element for a pre-defined period of time (e.g., pre-defined in a specification) or a pre-configured period of time (e.g., pre-configured from the network in the measurement configuration). The UE may further release the resources associated with the selected SMTC/ smtc-intraFreqCluster element for measurements of NTN cells.

In step S480, if a *stoppingTime* is indicated in the selected SMTC/SMTC Cluster element, the UE may stop applying the smtc-intraFreqCluster element for the measurements of NTN cells from the indicated stoppingTime. The UE may further release the resources associated with the smtc-intraFreqCluster elements.

In some embodiments, if *smtc-intraFreqClusterList* is present (e.g, in system information) for intra-frequency measurements (e.g., SIB2), for each selected SMTC/SMTC Cluster element of the *smtc-intraFreqClusterList,* a UE sets up SMTC by using the values of the parameters periodicity, offset, and duration indicated by the *smtc-intraFreqCluster* element;
UE use the SMTC periodicity of the serving cell as the default value of SMTC periodicity parameter if a value of SMTC periodicity is not indicated in a smtc-intraFreqCluster element, 0 as the default value of offset parameter if a value of offset is not indicated in a smtc-intraFreqCluster element, and use the SSB burst period associated with the subcarrier space of the indicated frequency as the value of duration if the value of duration is not indicated in a smtc-intraFreqCluster element; if the SMTC periodicity of the serving cell is not configured in the measurement configuration, the SSB periodicity of the serving cell is applied as the SMTC periodicity of the serving cell ; for cells associated with the PCIs indicated in the *pci-List* parameter of the *smtc-intraFreqCluster* element,
if the ntn-Config associated with the PCI is provided in SIB19, UE applies the ntn-Config associated with the PCI indicated in SIB19;
if the ntn-Config associated with the PCI is not provided in SIB19, UE applies the ntn-Config associated with the serving cell;

if *startingTime* is present, UE starts applying the SMTC associated with the *smtc-intraFreqConfig* element for intra-frequency measurements of NTN cells according to (e.g., starting from) the indicated *startingTime;*
if *startingTime* is not present, UE applies the SMTC associated with the *smtc-intraFreqConfig* element for intra-frequency cell reselection after the set up of the SMTC;
if *stoppingTime* is present, according to (e.g., starting from) the indicated *stoppingTime,* UE releases the SMTC associated with the *smtc-intraFreqCluster element;*
if *stoppingTime* is not present, UE release the SMTC associated with the *smtc-intraFreqCluster* element when there is no further cell detected accordingly, wherein there is no further cell detected accordingly could be decided according to e.g., there is no cell detected in a period of time (e.g., the time starting from that latest time is detected according to the *smtc-intraFreqCluster* element and last a period of time configured by a default value in specification or by a threshold value configured by the network).

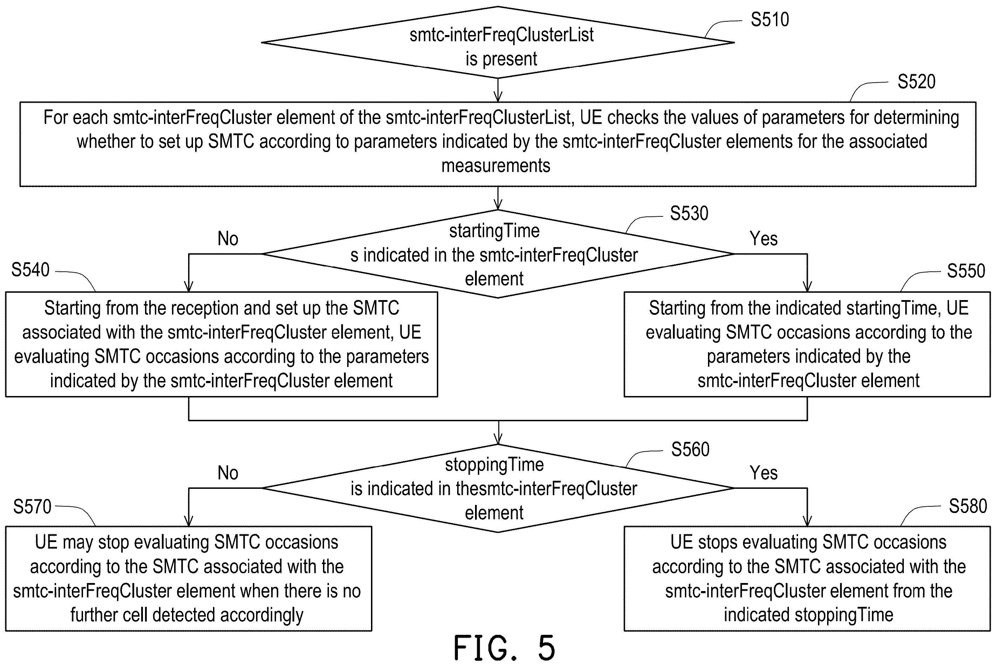

FIG. 5 is an exemplary flowchart illustrating a UE applying time-based SMTC for inter-frequency cell reselection according to an embodiment of the present disclosure. The method may be applicable to a UE in an RRC_IDLE, RRC_INACTIVE, or RRC_CONNECTED state performing measurements on a frequency different from that of the serving cell.

Please refer to FIG. 5, in step S510, the UE determines whether a *smtc-interFreqClusterList* is present, wherein the smtc-interFreqClusterList is configured in the measurement configuration to provide the at least one SMTC or SMTC cluster for inter-frequency measurements of cell(s) in the NTN. For example, the UE may check the system information (e.g., SIB4) provided by the serving cell for inter-frequency measurements. If the *smtc-interFreqClusterList* is present in the system information, the UE proceeds to check each smtc-interFreqCluster element within the list to determine whether to apply the smtc-interFreqCluster element for measurements of NTN cells. In one example, the UE may check the stored measurement configuration; if the smtc-interFreqClusterList is present in the stored measurement configuration, the UE proceeds to check each smtc-interFreqCluster element included in the list to determine whether to apply the smtc-interFreqCluster element for measurements of NTN cells.

The UE may select at least one valid smtc-interFreqCluster element as the selected SMTC/SMTC cluster element. The UE would apply the parameters indicated by the selected SMTC/ smtc-interFreqCluster element to set up a SMTC (i.e., to reserve measurement resources for NTN cell measurements that could comply with the parameter values configured by the selected SMTC) for inter-frequency measurements of NTN cells.

In step S520, for each selected SMTC/SMTC cluster element of the *smtc-interFreqClusterList,* the UE checks the values of parameters for determining whether to set up an associated SMTC. The determination is performed according to parameters indicated by the *smtc-interFreqCluster* element (e.g., the startingTime, the stoppingTime, *periodicity, offset, duration*) for the associated inter-frequency measurements of NTN cells.

In step S530, the UE determines whether a *startingTime* is indicated in the *smtc-interFreqCluster* element.

In step S540, if the *startingTime* is not indicated in the selected SMTC/SMTC cluster element, the UE may apply the values of the parameters associated with the selected SMTC/SMTC cluster element to set up a SMTC, to evaluate SMTC occasions associated with the selected SMTC/SMTC cluster element, and may start performing measurements according to the set up of the SMTC.

In step S550, if the *startingTime* is indicated in the selected SMTC/SMTC cluster element, starting from the indicated *startingTime,* the UE evaluates SMTC occasions according to the parameters indicated by the selected *SMTC*/*smtc-interFreqCluster* element and performs measurements of NTN cells according to the values of the parameters indicated by the selected SMTC/SMTC cluster element after set up the associated SMTC.

In step S560, the UE determines whether a *stoppingTime* is indicated in the *smtc-interFreqCluster* element.

In step S570, if the *stoppingTime* is not indicated in the selected SMTC/SMTC Cluster element, a UE may determine to stop applying a selected SMTC/SMTC Cluster element for the measurements of NTN cells, e.g., when there is no any cell is detected according to the selected SMTC/SMTC Cluster element for a pre-defined period of time (e.g., pre-defined in a specification) or a pre-configured period of time (e.g., pre-configured from the network in the measurement configuration). The UE may further release the resources associated with the selected SMTC/smtc-intraFreqCluster element for measurements of NTN cells.

In step S580, if a *stoppingTime* is indicated in the selected SMTC/SMTC Cluster element, the UE may stop applying the smtc-interFreqCluster element for the measurements of NTN cells from the indicated stoppingTime. The UE may further release the resources associated with the smtc-interFreqCluster element.

In some embodiments, if *smtc-interFreqClusterList* is present (e.g., in System Information) for inter-frequency measurements (e.g., SIB4), for each selected SMTC/SMTC cluster element of the *smtc-interFreqClusterList* of the indicated downlink frequency, the UE sets up SMTC associated with the *smtc-interFreqCluster* element by using the values of the parameters periodicity, offset, and duration indicated by the *smtc-interFreqCluster* element; UE set up SMTC associated with the *smtc-interFreqCluster* element by using the values of the parameters periodicity, offset, and duration indicated by the *smtc-interFreqCluster* element; UE uses the periodicity associated with the first element of the indicated *pci-List* (i.e., the first PCI of the *pci-List*) as the default value of periodicity parameter if a value of periodicity is not indicated;
UE uses 0 as the default value of offset parameter if a value of offset is not indicated, and uses the SSB burst period associated with the subcarrier space of the indicated frequency as the value of duration if the value of duration is not indicated for evaluating SMTC occasions.

In one embodiment, for cells associated with the PCIs indicated in the *pci-List* parameter of the *smtc-interFreqCluster* element,
if the ntn-Config associated with the PCI is provided in SIB19, UE applies the ntn-Config associated with the PCI indicated in SIB19;
if the ntn-Config associated with the PCI is not provided in SIB19, UE applies the ntn-Config associated with the first element of the indicated *pci-List;* if *startingTime* is present, UE starts applying the SMTC associated with the *smtc-interFreqConfig* element for inter-frequency measurements according to (e.g., starting from) the indicated *startingTime*;

if *startingTime* is not present, UE applies the SMTC associated with the *smtc-interFreqConfig* element for inter-frequency measurements after the set up of the SMTC;
if *stoppingTime* is present, according to (e.g., starting from) the indicated *stoppingTime,* UE stops applying the parameter values indicated by the smtc-interFreqCluster element for measurements and may release the SMTC associated with the *smtc-interFreqCluster* element;
if *stoppingTime* is not present, UE may stop applying the parameter values indicated by the smtc-interFreqCluster element for measurements and may releases the SMTC associated with the *smtc-interFreqCluster* element when there is no further cell detected accordingly, wherein there is no further cell detected accordingly could be decided according to e.g., there is no cell detected in a period of time (e.g., the time starting from that latest time is detected according to the *smtc-interFreqCluster* element and last a period of time configured by a default value in the specification or by a threshold value configured by the network).

In some embodiments, for a UE in an RRC_IDLE, RRC_INACTIVE, or RRC_CONNECTED state performing measurements of NTN cells, if the *smtc-interFreqClusterList* is present (e.g., in System Information) for inter-frequency measurements (e.g., SIB4), for each *smtc-interFreqCluster* element of the *smtc-interFreqClusterList* of the indicated downlink frequency, the UE sets up SMTC associated with the *smtc-interFreqCluster* element by using the values of the parameters offset and duration indicated by the *smtc-interFreqCluster* element;
UE uses the *periodicity* of the *smtc-interFreqCluster* element associated with the latest detected PCI of the *pci-List* as the default periodicity if a value of periodicity is not indicated;
UE uses 0 as the default value of offset parameter if a value of offset is not indicated, and use the SSB burst period associated with the subcarrier space of the indicated frequency as the value of duration if the value of duration is not indicated for evaluating SMTC occasions.

In one embodiment, for cells associated with the PCIs indicated in the *pci-List* parameter of the *smtc-interFreqCluster* element,
if the ntn-Config associated with the PCI is provided in SIB19, UE applies the ntn-Config associated with the PCI indicated in SIB19;
if the ntn-Config associated with the PCI is not provided in SIB19, UE applies the ntn-Config associated with the first element of the indicated *pci-List.*

In one embodiment, for cells associated with the PCIs not indicated in the *pci-List* parameter of the *smtc-interFreqCluster* element,
if the ntn-Config associated with the PCI is provided in SIB19, UE applies the ntn-Config associated with the PCI indicated in SIB19;
if the ntn-Config associated with the PCI is not provided in SIB19, UE applies the ntn-Config associated with the first element of the indicated *pci-List.*

In one embodiment, if *startingTime* is present, UE starts applying the SMTC associated with the *smtc-interFreqConfig* element for inter-frequency cell reselection according to (e.g., starting from) the indicated *startingTime;*
if *startingTime* is not present, UE applies the SMTC associated with the smtc-interFreqConfig element for inter-frequency cell reselection after the set up of the SMTC; if *stoppingTime* is present, according to (e.g., starting from) the indicated *stoppingTime,* UE releases the SMTC associated with the *smtc-interFreqCluster* element;
if *stoppingTime* is not present, UE releases the SMTC associated with the *smtc-interFreqCluster* element when there is no further cell detected accordingly, where there is no further cell detected accordingly could be decided according to e.g., there is no cell detected in a period of time (e.g., the time starting from that latest time is detected according to the *smtc-interFreqCluster* element and last a period of time configured by a default value in the specification or by a threshold value configured by the network).

In some scenarios, there may be alternative structures for the SMTC cluster. For example, an alternative SMTC cluster structure configured with offsets per neighbor cell group according to an embodiment of the present disclosure. In some embodiments, the SMTC cluster (*smtc-Cluster*) may include parameters including a starting time, a stopping time, a SMTC periodicity, a SMTC duration, and a neighbor cell list (*smtc-neighCellList*)*.* The neighbor cell list includes at least one neighbor cell entry (*smtc-neighCell*)*.* Each neighbor cell entry corresponds to a group of neighbor cells that share specific timing characteristics. More specifically, each neighbor cell entry includes a SMTC offset (*offset*) and a PCI list (*pci-List*) associated with that offset. For example, a cell whose NTN cell ID is listed in the *pci-List* corresponds to one SMTC offset. By configuring the offset per neighbor cell entity, the UE may cope with multiple offsets resulting from different propagation delays within a large satellite footprint.

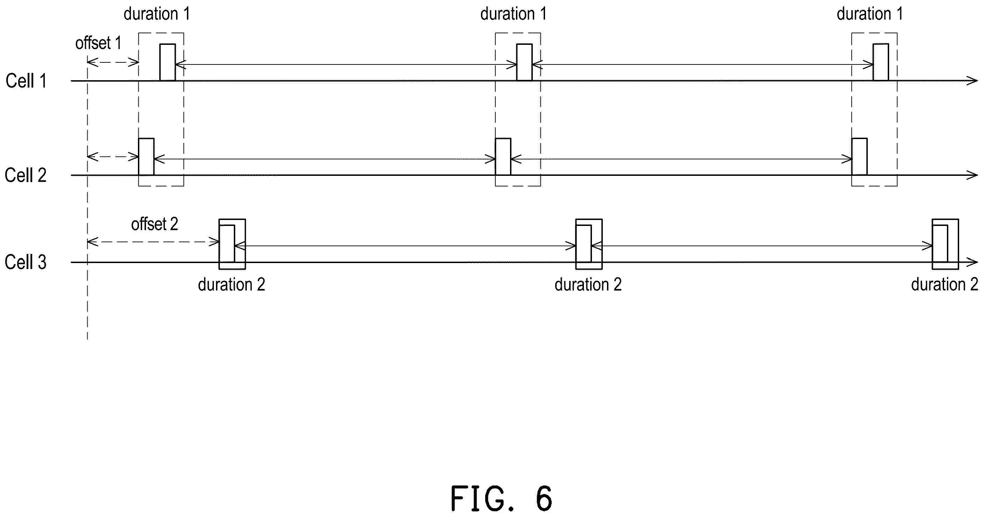

FIG. 6 is a schematic diagram illustrating the cells configured with a SMTC cluster according to an embodiment of the present disclosure. Please refer to FIG. 6, in some embodiments, the SMTC cluster element may include parameters, including a starting time, a stopping time, a SMTC periodicity, and a neighbor cell list (*smtc-neighCellList*)*.* In this embodiment, each neighbor cell entry (*smtc-neighCell*) includes a SMTC offset (*offset*)*,*a PCI list (*pci-List*)*,* and a SMTC duration (*duration*)*.* This structure allows for a specific duration to be configured per neighbor cell entity. For example, as shown in FIG. 6, cell 1 and cell 2 may be associated with "offset 1" and "duration 1", while cell 3 may be associated with "offset 2" and "duration 2" within the same cluster. This configuration helps the UE cope with the distributed beam sweeping time and the service residual time of a satellite beam in a geographic area.

In some embodiments, the validity condition may include reference location information. The reference location information indicates a geographic area where the SMTC is applicable. The reference location information may be configured, for example, in the format of an Ellipsoid-Point (including at least one of a latitude or a longitude). The reference location information is associated with a moving function to evaluate a current geographic location at a time point of the reference location. Correspondingly, the current status of the UE may include a current geographic location of the UE (e.g., a GNSS coordinate). The UE may select one or more target SMTC based on a comparison between the reference location information and the current geographic location.

In some embodiments, the current geographic location of the UE is obtained by the UE at a first current time of the UE, and the current geographic location associated with the reference location information is evaluated by the UE at a second current time of the UE. In some embodiments, the first current time of the UE and the second current time of the UE may not be identical. For example, a UE may use satellite positioning information (e.g., a GNSS information) to obtain the current geographic location of the UE, and obtain the current geographic location associated with the reference location information by checking the reference location information provided by the network or by applying the moving function with the reference location information and the second current time of the UE to calculate the current geographic location associated with the reference location. This accounts for processing delays or the time difference between when the UE positions itself and when it calculates the satellite's position.

In some embodiments, considering the dynamic nature of satellites in the NTN, the reference location information may be associated with a moving function to evaluate the actual geographic location of the reference location at a specific time point. Since the satellite serving the NTN cell moves along its orbit over time, the "reference location" (e.g., the center of the beam or the sub-satellite point) is not a fixed coordinate on the ground. Therefore, to accurately determine the validity of the SMTC, the UE evaluates the current geographic location associated with the reference location information based on a specific reference time (e.g., the current time of the UE). The moving function may utilize satellite ephemeris information, which typically includes orbital information or parameters and an epoch time, to calculate the position of a geographic location, which may change from time to time according to the movement of a satellite.

In some embodiments, a UE may evaluate the current geographic location associated with the reference location according to satellite ephemeris information associated with the serving cell. This scenario may apply when the SMTC cluster corresponds to a group of neighbor cells served by the same satellite as the serving cell (i.e., intra-satellite neighbor cells). Since the UE has already acquired the ephemeris information of the serving satellite (e.g., via System Information Block 19, SIB19), the UE can reuse the ephemeris information associated with the serving cell to calculate the current position of the reference location for the SMTC cluster.

In some embodiments, a UE may evaluate the current geographic location of the reference location associated with a first SMTC of the SMTCs according to the satellite ephemeris information associated with the first SMTC. That is, the satellite ephemeris information of one SMTC is used to calculate the current position of the reference location for the SMTC cluster.

In some embodiments, the UE may evaluate the current geographic location according to the first entry of the at least one NTN cell ID (e.g., the first PCI in the *pci-List*) associated with the SMTC cluster. This scenario applies, for example, when the SMTC cluster is associated with a neighbor satellite different from the serving satellite (i.e., inter-satellite neighbor cells). The measurement configuration may not explicitly carry the ephemeris for every single cell in the cluster. Instead, the UE assumes that all cells within the same SMTC cluster are served by the same satellite. Therefore, the UE retrieves the satellite ephemeris information corresponding to the first PCI listed in the SMTC cluster (e.g., by looking up a neighbor cell ephemeris provided in SIB19). The UE then applies this specific ephemeris to evaluate the moving reference location for the entire cluster.

In some embodiments, the reference location information is further associated with a distance threshold used for a UE to perform the comparison between the current geographic location of a UE and the reference location information. The distance threshold is a parameter configured by the network (e.g., via the system information) to define a validity distance around the reference location.

In some embodiments, a UE may calculate a distance between the current geographic location of the UE and the current location associated with the reference location. The distance may be calculated as a Euclidean distance in a three-dimensional or two-dimensional space. The UE compares the calculated distance with the distance threshold. If the calculated distance is less than (or equal to) the distance threshold, the UE determines that the validity condition is satisfied and may select the corresponding SMTC cluster as the target SMTC. If the calculated distance is larger than the distance threshold, the UE determines that the UE is outside the valid coverage area of the SMTC cluster and disables selecting (or stops using) the SMTC cluster.

In some embodiments, a location-based SMTC cluster is a SMTC cluster including a reference location and may include a distance threshold.

In some embodiments, each location-based SMTC cluster is associated with a SMTC periodicity for evaluating SMTC occasions. In some embodiments, the value of SMTC periodicity may be indicated by the location-based SMTC cluster. In some embodiments, the value of SMTC periodicity associated with the location-based SMTC cluster could be considered the same as the SSB periodicity of the serving cell (i.e., the cell provided/transmitted the SMTC to UE) if the value of SMTC periodicity is not indicated by the location-based SMTC cluster.

In some embodiments, each location-based SMTC cluster may include a list of PCI, wherein the list of PCI consists of at least one PCI. For example, assuming a location-based SMTC cluster associated with a satellite, each PCI of the list of PCI is associated with a cell served by the satellite, therefore, all PCI of the list of PCI could be considered as served by the same satellite. In some embodiments, if a list of PCI is not indicated in the location-based SMTC cluster, or a PCI of a cell detected by the UE is not included in the list of PCI of the frequency associated with the location-based SMTC cluster,
a cell of the frequency same with the serving cell not included in the list of PCI (if configured) is considered to apply the ntn-Config of the serving cell (including applying the ephemerous, epochTime, common timing advance parameters, etc.);
a cell of the frequency different from the serving cell not included in the list of PCI (if configured) is considered to apply the ntn-Config associated with the PCI of the cell as indicated in SIB19.

In one embodiment, if the PCI of a cell is not indicated in the list of PCI nor in the SIB19 provided by the serving cell,
the ntn-Config to be applied is the ntn-Config associated with the first cell that the first cell is the first detected cell of the frequency and the PCI of the first cell is included in the list of PCI or indicated in SIB19; or
the ntn-Config to be applied is the ntn-Config associated with the previous cell that the previous cell is the cell of the frequency and is detected before the current cell is detected and the PCI of the previous cell is included in the list of PCI or indicated in SIB19; or
the ntn-Config to be applied is the ntn-Config associated with the second cell that the second cell is the latest detected cell of the frequency and the PCI of the second cell is included in the PCI or indicated in SIB19.

In some embodiments, a specific location-based selection mechanism is applied for intra-frequency cell reselection. When the measurement configuration comprises a list of at least one smtc cluster element (e.g., a *smtc-intraFreqClusterList*)*,* the UE may select at least one SMTC cluster element from the list as the selected SMTC/SMTC cluster element, and may set up SMTC for each selected SMTC/SMTC cluster element. The UE checks if a reference location (e.g., *referenceLocation*) and/or a distance threshold (e.g., a *distanceThreshold*) is indicated in the SMTC cluster element. If both reference location and distance threshold are indicated in the SMTC cluster element, the UE may select the STMC cluster element as the selected SMTC/SMTC cluster element when the distance between the current location of the UE and the current location of the indicated reference location is less than the indicated distance threshold. The distance may refer to Euclidean distance. The UE may stop applying the selected SMTC/SMTC cluster element (including stopping evaluating SMTC occasions by applying the values of the parameters indicated by the selected SMTC/SMTC cluster element) when the distance becomes not less than the indicated distance threshold, and the UE may release the selected SMTC/SMTC cluster element (e.g., release the measurement resources associated with the selected SMTC/SMTC cluster element). If reference location and distance threshold are not indicated in the selected SMTC/SMTC cluster element, the UE may apply the selected SMTC/SMTC cluster elements (e.g., by applying the values of the parameters indicated by the selected SMTC/SMTC cluster element after set up SMTC according to the selected SMTC/SMTC cluster element) for measurement and start evaluating SMTC occasions accordingly

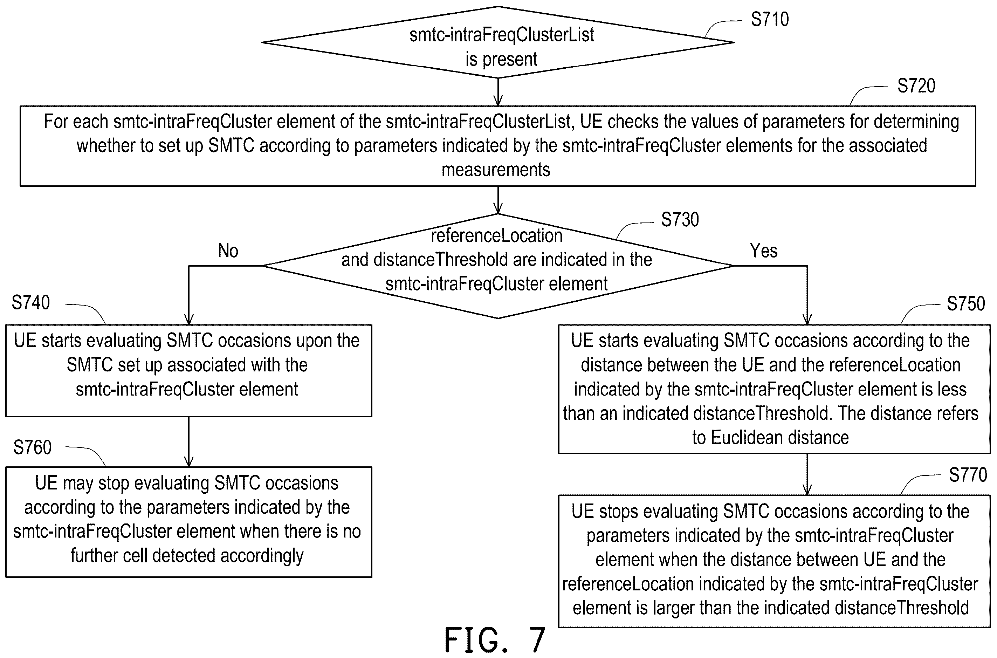

FIG. 7 is an exemplary flowchart illustrating a UE applying a location-based SMTC mechanism for intra-frequency measurements of NTN cells according to an embodiment of the present disclosure. The method is applicable to a UE in an RRC_IDLE, RRC_INACTIVE, or RRC_CONNECTED state.

Please refer to FIG. 7, in step S710, the UE determines whether a *smtc-intraFreqClusterList* is present, wherein the smtc-intraFreqClusterList is included in the measurement configuration to configure the list of at least one SMTC cluster element for intra-frequency measurements of cell(s) in the NTN. In some examples, the UE may obtain the measurement configuration from the system information (e.g., SIB2) provided by the serving cell. If the *smtc-intraFreqClusterList* is present in the measurement configuration obtained from the system information, the UE proceeds to check each smtc-intraFreqCluster element within the list to determine whether to apply the smtc-intraFreqCluster element for measurements of NTN cells. In some examples, the UE may check the stored measurement configuration; if the *smtc-intraFreqClusterList* is present in the stored measurement configuration, the UE proceeds to check each smtc-intraFreqCluster element within the list to determine whether to apply the smtc-intraFreqCluster element for measurements of NTN cells.

The UE may select at least one valid smtc-intraFreqCluster element from the smtc-intraFreqClusterList as selected SMTC/SMTC cluster element. In some cases, the number of smtc-intraFreqCluster elements configured by the measurement configuration does not exceed the capability of a UE, the UE may select each smtc-intraFreqCluster element included in the smtc-intraFreqClusterList as the selected SMTC/ SMTC cluster element. In some cases, the number of smtc-intraFreqCluster elements included in the measurement configuration exceeds the capability of a UE, for each *smtc-intraFreqCluster* element of the *smtc-intraFreqClusterList,* the UE checks the values of parameters for determining whether to select a smtc-intraFreqCluster element as the selected SMTC/SMTC cluster element for performing the measurements of NTN cells. If at least one of referenceLocation (i.e., the reference location) and distanceThreshold (i.e., the distance threshold) associated with a smtc-intraFreqCluster element is present, the determination of selecting a *smtc-intraFreqCluser* element would be performed to select at least one selected SMTC according to at least one of the *referenceLocation* or *distanceThreshold* associated with the *smtc-intraFreqCluster* element. If none of the *referenceLocation* associated with a *smtc-intraFreqCluster* element is present, the determination of selecting a smtc-intraFreqCluster element could be performed by the UE implementation.

The UE may select at least one valid smtc-intraFreqCluster element as selected SMTC/SMTC Cluster element. The UE would apply the parameters indicated by the selected SMTC/SMTC Cluster element to set up a SMTC for the measurements of NTN cells. In some cases, when a referenceLocation associated with a smtc-intraFreqCluster element is indicated, the smtc-intraFreqCluster element could be considered as valid (i.e., a valid smtc-intraFreqCluster element of the UE). In some cases, when a *referenceLocation* and a *distanceThreshold* associated with a *smtc-intraFreqCluster* element are indicated and the distance between the current location of the UE and the current location of the reference location associated with the referenceLocation is less than the distanceThreshold, the *smtc-intraFreqCluster* element could be considered as a valid *smtc-intraFreqCluster* element of the UE.

In step S720, for each selected SMTC/SMTC cluster element, the UE checks the values of parameters for determining whether to set up a SMTC according to the indicated parameters (e.g., periodicity, offset, duration). The determination is performed according to at least one of the parameters indicated by the smtc-intarFreqCluster element, such as the referenceLocation, distanceThreshold, SMTC periodicity, offset, and duration. The selection of SMTC cluster element may be performed according to the sort from near to far by the distance between the current UE location and the current value of the reference location of each SMTC cluster element.

In step S730, the UE checks if a *referenceLocation* and a *distanceThreshold* are indicated in a selected SMTC/SMTC cluster element.

In step S740, if both *referenceLocation* and *distanceThreshold* are not indicated in the selected SMTC/SMTC cluster element, the UE may apply the values of the parameters associated with the selected SMTC/SMTC cluster element to set up a SMTC and may start performing measurements according to the set up SMTC.

In step S750, if both *referenceLocation* and *distanceThreshold* are indicated in the selected SMTC/SMTC cluster element, the UE starts evaluating SMTC occasions according to the distance between the UE current location and the value of *referenceLocation* at the current time associated with the selected SMTC/SMTC cluster element being less than the indicated *distanceThreshold* of the selected SMTC/SMTC cluster element after the SMTC according to the selected SMTC/*smtc-intraFreqCluster* element is set up.

In step S760, UE may stop evaluating SMTC occasions according to the parameters indicated by the selected SMTC/SMTC cluster element, e.g., when there is no cell be detected according to the selected SMTC/SMTC cluster element for a pre-defined period of time (e.g., pre-defined in a specification) or a pre-configured period of time (e.g., pre-configured from the network in the measurement configuration). The UE may further release the resources associated with the selected SMTC/SMTC cluster element for measurements of NTN cells.

In step S770, UE stops evaluating SMTC occasions according to the parameters indicated by the *smtc-intraFreqCluster* element when the distance between the current location of UE and the value of *referenceLocation* at the current time becomes larger than the indicated *distanceThreshold.* The UE may further release the resources associated with the selected SMTC/SMTC cluster element for measurements of NTN cells.

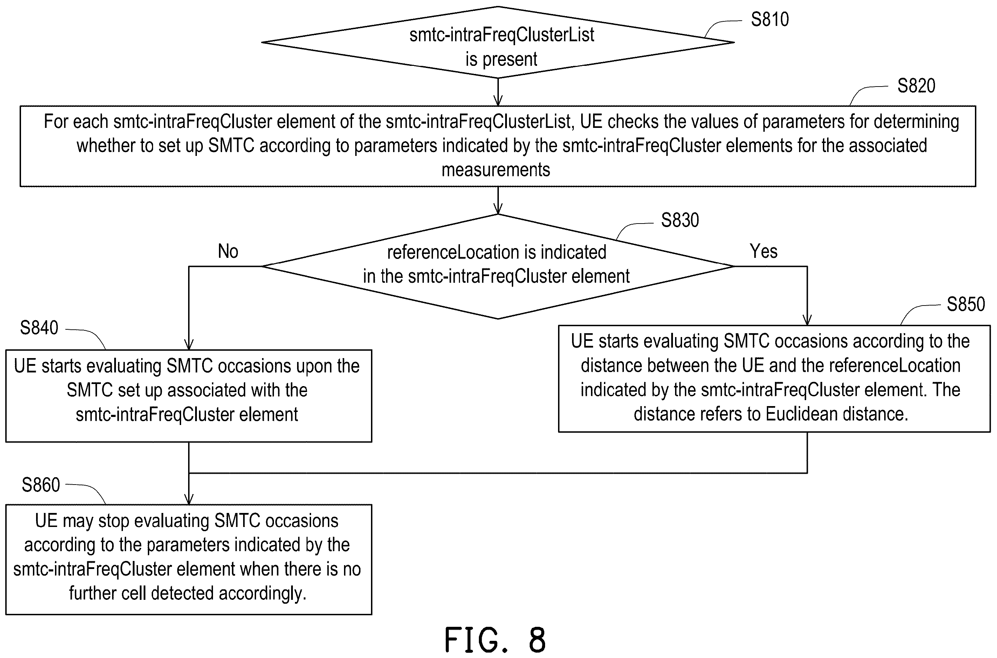

FIG. 8 is an examplery flowchart illustrating a UE applying location-based SMTC mechanism without a distance threshold associated with the at least one selected SMTC/SMTC cluster element for intra-frequency measurements according to an embodiment of the present disclosure. Please refer to FIG. 8, in step S810, the UE determines whether a smtc-intraFreqClusterList is present in the received measurement configuration.

In step S820, for each selected SMTC/SMTC cluster element, the UE checks the values of parameters for determining whether to set up a SMTC according to parameters indicated by the associated *smtc-intraFreqCluster* elements of the *smtc-intraFreqClusterList* for the associated measurements of cells of the NTN.

In step S830, the UE determines whether *referenceLocation* is indicated in the selected SMTC/SMTC cluster element.

In step S840, if *referenceLocation* is not indicated, the UE starts evaluating SMTC occasions after the SMTC set up associated with the selected SMTC/SMTC cluster element.

In step S850, if *referenceLocation* is indicated, the UE starts evaluating SMTC occasions according to the distance between the current UE location and the value of *referenceLocation* at current time associated with the selected SMTC/SMTC cluster element. A UE may utilize the distance for the selection or prioritization of SMTC/SMTC cluster elements. For example, if the total number of the smtc-intraFreqCluster elements (e.g., of *smtc-intraFreqClusterList* is less than the capability of a UE (i.e., the amount of SMTC for intra-frequency measurement the UE could support), the UE may start applying the values of the parameters indicated by the *smtc-intraFreqCluster* elements of *smtc-intraFreqClusterList.* If the total number exceeds the UE capability, the UE may select part of the smtc-intraFreqCluster element(s) of the *smtc-intraFreqClusterList;* the selection may be UE implementation or depending on the distance between the UE and the indicated *referenceLocation* (e.g., selecting the closest ones).

In step S860, the UE may stop evaluating SMTC occasions according to the parameters indicated by the selected SMTC/SMTC cluster element, e.g., when there is no further cell detected accordingly.

In some embodiments, for a UE in RRC_IDLE/RRC_INACTIVE/RRC_CONNECTED state performing measurements for cells in the NTN, if *smtc-intraFreqClusterList* is present (e.g, in system information) for intra-frequency measurements (e.g., in SIB2), UE set up SMTC by using the values of the parameters SMTC periodicity, offset, and duration indicated by the *smtc-intraFreqCluster* element; In some embodiments, UE use the SSB periodicity of the serving cell as the default value of SMTC periodicity parameter if a value of SMTC periodicity is not indicated, 0 as the default value of offset parameter if a value of offset is not indicated, and use the SSB burst period associated with the subcarrier space of the indicated frequency as the value of duration if the value of duration is not indicated for evaluating SMTC occasions.

In some embodiments, for cells associated with the PCIs indicated in the pci-List parameter of the smtc-intraFreqCluster element,
if the ntn-Config associated with the PCI is provided in SIB19, UE applies the ntn-Config associated with the PCI indicated in SIB19;
if the ntn-Config associated with the PCI is not provided in SIB19, UE applies the ntn-Config associated with the serving cell.

In some embodiments, for cells associated with the PCIs not indicated in the pci-List parameter of the smtc-intraFreqCluster element,
if the ntn-Config associated with the PCI is provided in SIB19, UE applies the ntn-Config associated with the PCI indicated in SIB19;
if the ntn-Config associated with the PCI which is not provided in SIB19, UE applies the ntn-Config associated with the serving cell.

In some embodiments, if *referenceLocation* is not present and UE support location-based SMTC mechanism, UE applies the values of the parameters associated with the smtc-intraFreqCluster element for intra-frequency measurements after the set up of the SMTC associated with the smtc-intraFreqCluster element.

In one embodiment, UE may release the SMTC associated with the smtc-intraFreqCluster element when there is no further cell detected accordingly, wherein there is no further cell detected accordingly could be decided according to e.g., there is no cell detected in a period of time (e.g., the time starting from that latest time is detected according to the smtc-intraFreqCluster element and last a period of time configured by a default value in specification or by a threshold value configured by the network).

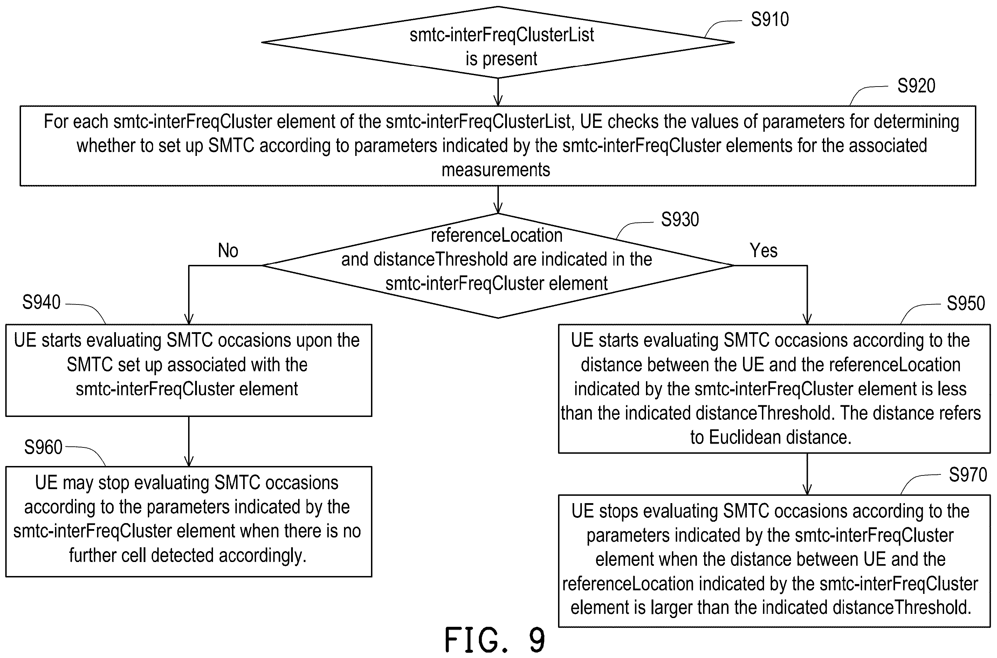

FIG. 9 is an exemplary flowchart illustrating a UE applying a location-based SMTC mechanism for inter-frequency measurement of NTN cells according to an embodiment of the present disclosure. The method is applicable to a UE in an RRC_IDLE, RRC_INACTIVE, or RRC_CONNECTED state.

Please refer to FIG. 9, in step S910, the UE determines whether a smtc-*interFreqClusterList* is present, wherein the smtc-interFreqClusterList is included in the measurement configuration to configure the list of at least one SMTC cluster element for inter-frequency measurements of cell(s) in the NTN. In some examples, the UE may obtain the measurement configuration from the system information (e.g., SIB4) provided by the serving cell. If the *smtc-interFreqClusterList* is present in the measurement configuration obtained from the system information, the UE proceeds to check each smtc-interFreqCluster element within the list to determine whether to apply the smtc-interFreqCluster element for measurements of NTN cells. In some examples, the UE may check the stored measurement configuration; if the *smtc-interFreqClusterList* is present in the stored measurement configuration, the UE proceeds to check each smtc-interFreqCluster element within the list to determine whether to apply the smtc-interFreqCluster element for measurements of NTN cells.

The UE may select at least one valid smtc-interFreqCluster element from the smtc-interFreqClusterList as selected SMTC/SMTC cluster element. In some cases, the number of smtc-interFreqCluster elements configured by the measurement configuration does not exceed the capability of a UE, the UE may select each smtc-interFreqCluster element included in the smtc-interFreqClusterList as the selected SMTC/ SMTC cluster element. In some cases, the number of smtc-interFreqCluster elements included in the measurement configuration exceeds the capability of a UE, for each *smtc-interFreqCluster* element of the *smtc-interFreqClusterList,* the UE checks the values of parameters for determining whether to select a smtc-interFreqCluster element as selected SMTC/SMTC cluster element for performing the measurements of NTN cells. If at least one of *referenceLocation* (i.e., the reference location) and *distanceThreshold* (i.e., the distance threshold) associated with a smtc-interFreqCluster element is present, the determination of selecting a *smtc-interFreqCluser* element would be performed to select at least one selected SMTC according to at least one of the *referenceLocation* or *distanceThreshold* associated with the *smtc-interFreqCluster* element. If none of the *referenceLocation* or *distanceThreshold* associated with a smtc-interFreqCluster element is present, the determination of selecting a smtc-interFreqCluster element could be performed by UE implementation.

The UE may select at least one valid smtc-interFreqCluster element as selected SMTC/smtc-interFreqCluster. The UE would apply the parameters indicated by the selected SMTC/SMTC cluster element to set up a SMTC for the measurements of NTN cells. In some cases, when a *referenceLocation* associated with a *smtc-interFreqCluster* element is indicated, the smtc-interFreqCluster element could be considered as valid (i.e., a valid smtc-interFreqCluster element of the UE). In some cases, when a *referenceLocation* and a *distanceThreshold* associated with a *smtc-interFreqCluster* element are indicated and the distance between the current location of the UE and the current location of the reference location associated with the referenceLocation is less than the distanceThreshold, the smtc-interFreqCluster element could be considered as a valid smtc-interFreqCluster element of the UE.

In step S920, for each selected SMTC/SMTC cluster element, the UE checks the values of parameters for determining whether to set up a SMTC according to parameters indicated by the associated *smtc-interFreqCluster* elements of the *smtc-interFreqClusterList* for the associated inter-frequency measurements of cells of the NTN.

In step S930, the UE checks if *referenceLocation* and *distanceThreshold* are indicated in the selected SMTC/SMTC cluster element.

In step S940, if *referenceLocation and distanceThreshold* are not indicated in the selected SMTC/SMTC cluster element, the UE may apply the values of the parameters associated with the selected SMTC/SMTC cluster element to set up a SMTC and may start performing measurements according to the set up SMTC.

In step S950, if *referenceLocation* and *distanceThreshold* are indicated in the selected SMTC/SMTC cluster element, the UE starts evaluating SMTC occasions according to the distance between the UE current location and the value of *referenceLocation* at the current time associated with the selected SMTC/SMTC cluster element.

In step S960, the UE may stop evaluating SMTC occasions according to the parameters indicated by the selected SMTC/SMTC cluster element e.g., when there is no cell be detected according to the selected SMTC/SMTC cluster element for a pre-defined period of time (e.g., pre-defined in a specification) or a pre-configured period of time (e.g., pre-configured from the network in the measurement configuration). The UE may further release the resources associated with the selected SMTC/SMTC cluster element for measurements of NTN cells.

In step S970, the UE may stop evaluating SMTC occasions according to the parameters indicated by the *smtc-interFreqCluster* element when the distance between UE current location and the value of *referenceLocation* at current time becomes larger than the indicated *distanceThreshold.* The UE may further release the resources associated with the selected SMTC/SMTC cluster element for measurements of NTN cells.

In some embodiments, for a UE in RRC_IDLE/RRC_INACTIVE/RRC_CONNECTED state performing measurements for cell reselection, if *smtc-interFreqClusterList* is present (e.g., in System Information) for inter-frequency measurements (e.g., in SIB4), for each *smtc-interFreqCluster* element of the *smtc-interFreqClusterList* of the indicated downlink frequency, UE set up SMTC associated with the *smtc-interFreqCluster* element by using the values of the parameters periodicity, offset, and duration indicated by the *smtc-interFreqCluster* element;
UE uses the SMTC periodicity of the first element of the indicated *pci-List* (i.e., the first PCI of the *pci-List*) as the default value of SMTC periodicity parameter if a value of SMTC periodicity is not indicated;
UE uses 0 as the default value of the offset parameter if a value of offset is not indicated, and uses the SSB burst period associated with the subcarrier space of the indicated frequency as the value of duration if the value of duration is not indicated for evaluating SMTC occasions.

In one embodiment, for cells associated with the PCIs indicated in the *pci-List* parameter of the *smtc-interFreqCluster* element,
if the ntn-Config associated with the PCI is provided in SIB19, UE applies the ntn-Config associated with the PCI indicated in SIB19;
if the ntn-Config associated with the PCI is not provided in SIB19, UE applies the ntn-Config associated with the first element of the indicated pci-List.

In one embodiment, for cells associated with the PCIs not indicated in the *pci-List* parameter of the *smtc-interFreqCluster* element,
if the ntn-Config associated with the PCI is provided in SIB19, UE applies the ntn-Config associated with the PCI indicated in SIB19;
if the ntn-Config associated with the PCI is not provided in SIB19, UE applies the ntn-Config associated with first element of the indicated *pci-List.*

In one embodiment, if *referenceLocation* is present and UE supports location-based cell reselection,
when the distance between UE and the indicated *referenceLocation* of the *smtc-interFreqCluster* element is less than the indicated *distanceThreshold* of the *smtc-interFreqCluster* element, UE evaluates SMTC occasions according to the SMTC associated with the *smtc-intraFreqCluster* element;
when the distance between UE and the indicated *referenceLocation* is larger than the indicated *distanceThreshold,* UE releases the SMTC associated with the *smtc-interFreqCluster.* In one embodiment, if *referenceLocation* is not present and UE supports location-based cell reselection,
UE evaluates SMTC occasions according to the SMTC upon/after the SMTC associated with *smtc-interFreqCluster* element is set up;
UE may release the STMC associated with the *smtc-interFreqCluster* element when there is no further cell detected accordingly, wherein there is no further cell detected accordingly could be decided according to e.g., there is no cell detected in a period of time (e.g., the time starting from that latest time is detected according to the *smtc-interFreqCluster* element and last a period of time configured by a default value in specification or by a threshold value configured by the network).

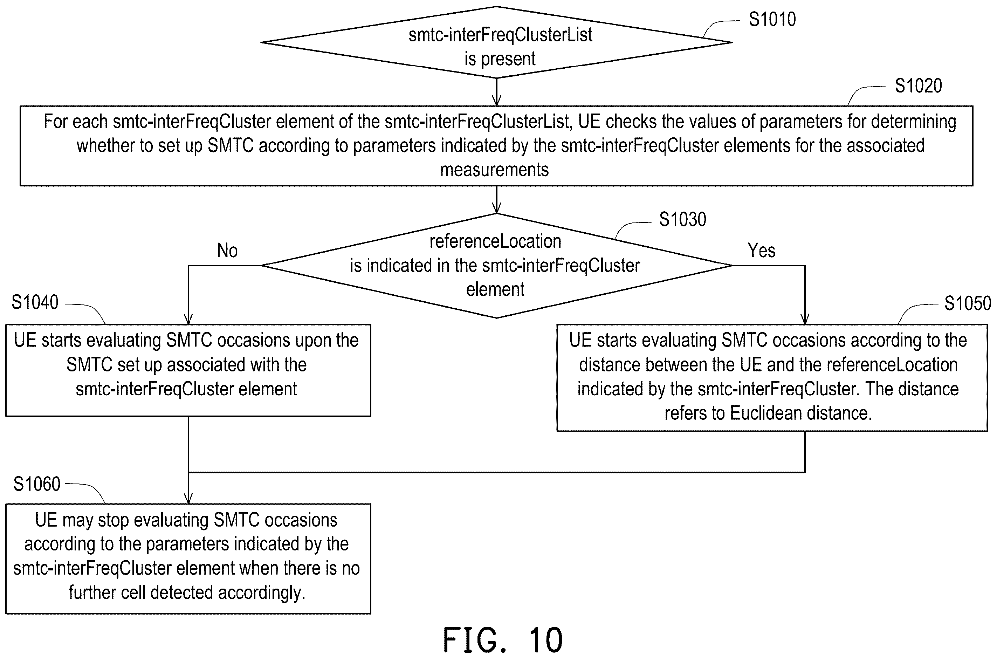

FIG. 10 is an exemplary flowchart illustrating a UE applying location-based SMTC mechanism without a distance threshold associated with the at least one selected SMTC/SMTC cluster element for inter-frequency cell measurements according to an embodiment of the present disclosure. Please refer to FIG. 10, in step S1010, the UE determines whether a *smtc-interFreqClusterList* is present in the received measurement configuration.

In step S1020, for each SMTC/SMTC cluster element, the UE checks the values of parameters for determining whether to set up a SMTC according to parameters indicated by the associated *smtc-interFreqCluster* elements of the *smtc-interFreqClusterList* for the associated inter-frequency measurements of cells in the NTN.

In step S1030, the UE determines whether *referenceLocation* is indicated in the *smtc-interFreqCluster* element associated with the selected SMTC/SMTC cluster.

In step S1040, if *referenceLocation* is not indicated, the UE starts evaluating SMTC occasions after the SMTC set up associated with the selected SMTC/SMTC cluster element.

In step S1050, if *referenceLocation* is indicated, the UE starts evaluating SMTC occasions according to the distance between the current UE location and the value of *referenceLocation* at current time associated with the selected SMTC/SMTC cluster element. A UE may utilize the distance for the selection or prioritization of SMTC/SMTC cluster elements. For example, if the total number of the smtc-intraFreqCluster elements (e.g., of *smtc-interFreqClusterList*) is less than the UE capability, the UE may start applying the values of the parameters indicated by the *smtc-interFreqCluster* elements of *smtc-intraFreqClusterList.* If the total number exceeds the UE capability, the UE may select part of the smtc-intraFreqCluster element(s) of the *smtc-intraFreqCluster*List; the selection may be UE implementation or depending on the distance between the UE and the indicated *referenceLocation* (e.g., selecting the closest ones).

In step S1060, the UE may stop evaluating SMTC occasions according to the parameters indicated by the selected SMTC/SMTC cluster element, e.g., when there is no further cell detected accordingly.

In some embodiments, for a UE in RRC_IDLE/RRC_INACTIVE/RRC_CONNECTED state performing measurements for cells in the NTN, if *smtc-interFreqClusterList* is present (e.g., in System Information) for inter-frequency measurements (e.g., in SIB4), for each *smtc-interFreqCluster* element of the *smtc-interFreqClusterList* of the indicated downlink frequency, UE sets up SMTC associated with the *smtc-interFreqCluster* element by using the values of the parameters SMTC periodicity, offset, and duration indicated by the *smtc-interFreqCluster* element; in one embodiment, UE uses the periodicity of the first element of the indicated *pci-List* (i.e., the first PCI of the *pci-List*) as the default value of the periodicity parameter if a value of periodicity is not indicated;
UE uses 0 as the default value of the offset parameter if a value of offset is not indicated, and use the SSB burst period associated with the subcarrier space of the indicated frequency as the value of duration if the value of duration is not indicated for evaluating SMTC occasions.

In one embodiment, for cells associated with the PCIs indicated in the *pci-List* parameter of the *smtc-interFreqCluster* element,
if the ntn-Config associated with the PCI is provided in SIB19, UE applies the ntn-Config associated with the PCI indicated in SIB19;
if the ntn-Config associated with the PCI is not provided in SIB19, UE applies the ntn-Config associated with the first element of the indicated pci-List.

In one embodiment, for cells associated with the PCIs not indicated in the *pci-List* parameter of the *smtc-interFreqCluster* element,
if the ntn-Config associated with the PCI is provided in SIB19, UE applies the ntn-Config associated with the PCI indicated in SIB19;
if the ntn-Config associated with the PCI is not provided in SIB19, UE applies the ntn-Config associated with the first element of the indicated *pci-List.*

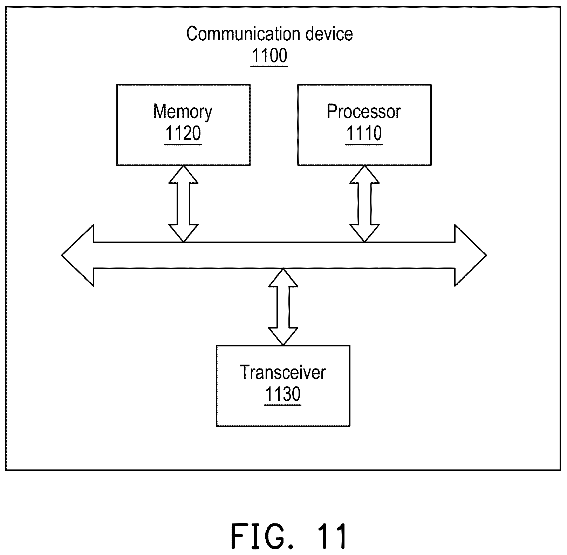

FIG. 11 is a block diagram that illustrates a communication device 1100 according to an exemplary embodiment of the present disclosure. The communication device 1100 may be a UE or a network device. The communication device 1100 may include, but is not limited thereto, a processor 1110. The processor 1110 (e.g., having processing circuitry) may include an intelligent hardware device, or be implemented as a central processing unit (CPU), microprocessor unit (MPU), a microcontroller (MCU), system on chip (SoC), digital signal processor (DSP), graphics processing unit (GPU), deep-learning processing unit (DPU), neural network processing unit (NPU), tensor processing unit (TPU), application specific integrated circuit (ASIC), programmable logic device (PLD), or field programmable gate array (FPGA), but the disclosure is not limited thereto. The processor 1110 may call and run a computer program from memory to implement the method in the embodiment of the disclosure.

Optionally, the communication device 1100 may further include a memory 1120. Optionally, the communication device 1100 may further include a transceiver 1130, and the processor 1110 may control the transceiver 1130 to communicate with other devices.

Optionally, the communication device 1100 may specifically be a mobile terminal, a terminal device, an NTN terminal, or a UE in an embodiment of the disclosure, and the communication device 1100 may implement the corresponding process implemented by the mobile terminal, the terminal device, or the UE in various methods in the embodiment of the disclosure. For conciseness, a related description is omitted.

## Claims

1. A method, used by a User Equipment, UE, (1100) served by a serving node in a Non-Terrestrial Network, NTN, the method comprising:
receiving a measurement configuration, wherein the measurement configuration comprises a plurality of SSB Measurement Timing Configurations, SMTCs; and
selecting at least one target SMTC from the plurality of SMTCs for measurements of cells of the NTN.

2. The method according to claim 1, wherein each of the plurality of SMTCs is associated with a validity condition, and selecting the at least one target SMTC from the plurality of SMTCs for the measurement of the cells of the NTN comprises:
selecting the at least one target SMTC based on a comparison between the validity condition of each of the plurality of SMTCs and a current status of the UE (1100).

3. The method according to claim 2, wherein the validity condition comprises reference time information to indicate time from which one of the plurality of SMTCs is applicable to the UE (1100) served by the serving node, and the current status of the UE (1100) comprises a current time of the UE (1100).

4. The method according to claim 3, wherein
the reference time information comprises a starting time associated with one of the plurality of SMTCs to be applicable to the UE (1100) served by the serving node, and selecting the at least one target SMTC based on the comparison between the validity condition of each of the plurality of SMTCs and the current status of the UE (1100) comprises:
selecting the one of the plurality of SMTCs as the at least one target SMTC based on the comparison between the current time of the UE (1100) and the starting time associated with the SMTC; or
the reference time information comprises a stopping time associated with one of the plurality of SMTCs to indicate a time from which an associated SMTC turns to not applicable, and selecting the at least one target SMTC based on the comparison between the validity condition of each of the plurality of SMTC and the current status of the UE (1100) comprises:
disabling selecting the one of the plurality of SMTCs as the at least one target SMTC based on the comparison between the current time of the UE (1100) and the stopping time; or
the reference time information comprises an applicable duration associated with one of the plurality of SMTCs that the SMTC is considered as applicable to the UE (1100) during the applicable duration, and selecting the at least one target SMTC based on the comparison between the validity condition of each of the plurality of SMTC and the current status of the UE (1100) comprises:
selecting the one of the plurality of SMTCs as the at least one target SMTC based on the comparison between the current time of the UE (1100) and the applicable duration.

5. The method according to any one of claims 2-4, wherein the current status of the UE (1100) comprises a current geographic location of the UE (1100), and the validity condition comprises reference location information to evaluate a current geographic location of the reference location,
wherein the current geographic location of the UE (1100) is obtained by the UE (1100) at a first current time of the UE (1100),
wherein the current geographic location of the reference location information is evaluated by the UE (1100) at a second current time of the UE (1100).

6. The method according to claim 5, wherein
selecting the at least one target SMTC based on the comparison between the validity condition of each of the plurality of SMTCs and the current status of the UE (1100) comprises:
evaluating the current geographic location of the reference location according to satellite ephemeris information associated with the serving cell of the UE (1100); or
selecting the at least one target SMTC based on the comparison between the validity condition of each of the plurality of SMTCs and the current status of the UE (1100) comprises:
evaluating the current geographic location of the reference location associated with a first SMTC of the plurality of SMTCs according to satellite ephemeris information associated with the first SMTC; or
the reference location information is further associated with a distance threshold used for the comparison between the current geographic location of the UE (1100) and the reference location information.

7. The method according to any one of claims 1-6, wherein the plurality of SMTCs comprised in the measurement configuration is configured as at least one SMTC cluster, each of the at least one SMTC cluster is associated with at least one NTN cell ID.

8. The method according to claim 7, wherein each of the at least one SMTC cluster comprises at least one of a SMTC offset, a SMTC periodicity, or a SMTC duration.

9. The method according to claim 7, wherein each one NTN cell ID of the at least one NTN cell ID is a Physical Cell Identity, PCI.

10. The method according to any one of claims 1-9, further comprising:
performing cell reselection according to the measurements of cells of the NTN according to the at least one target SMTC.

11. The method according to any one of claims 1-10, further comprising:
receiving a System Information broadcast, wherein the System Information broadcast carries the measurement configuration; or
receiving a UE specific Radio Resource Control, RRC, message, wherein the UE specific RRC message carries the measurement configuration.

12. A user equipment, UE, (1100) served by a serving node in a Non-Terrestrial Network, NTN, the UE (1100) comprising:
a transceiver (1130); and
a processor (1110), coupled to the transceiver (1130), and configured to perform:
receiving, through the transceiver (1130), a measurement configuration, wherein the measurement configuration comprises a plurality of SSB Measurement Timing Configurations, SMTCs; and
selecting at least one target SMTC from the plurality of SMTCs for measurements of cells of the NTN.

13. The UE (1100) according to claim 12, wherein each of the plurality of SMTCs is associated with a validity condition, and the processor (1110) is further configured to perform:
selecting the at least one target SMTC based on a comparison between the validity condition of each of the plurality of SMTCs and a current status of the UE (1100).

14. The UE (1100) according to claim 13, wherein the validity condition comprises reference time information to indicate time from which one of the plurality of SMTCs is applicable to the UE (1100) served by the serving node, and the current status of the UE (1100) comprises a current time of the UE (1100).

15. The UE (1100) according to claim 14, wherein
the reference time information comprises a starting time associated with one of the plurality of SMTCs to be applicable to the UE (1100) served by the serving node, and the processor (1110) is further configured to perform:
selecting the one of the plurality of SMTCs as the at least one target SMTC based on the comparison between the current time of the UE (1100) and the starting time associated with the SMTC; or
the reference time information comprises a stopping time associated with one of the plurality of SMTCs to indicate a time from which an associated SMTC turns to not applicable, and the processor (1110) is further configured to perform:
disabling selecting the one of the plurality of SMTCs as the at least one target SMTC based on the comparison between the current time of the UE (1100) and the stopping time; or
the reference time information comprises an applicable duration associated with one of the plurality of SMTCs that the SMTC is considered as applicable to the UE (1100) during the applicable duration, and the processor (1110) is further configured to perform:
selecting the one of the plurality of SMTCs as the at least one target SMTC based on the comparison between the current time of the UE (1100) and the applicable duration.

16. The UE (1100) according to any one of claims 13-15, wherein the current status of the UE (1100) comprises a current geographic location of the UE (1100), and the validity condition comprises reference location information to evaluate a current geographic location of the reference location,
wherein the current geographic location of the UE (1100) is obtained by the UE (1100) at a first current time of the UE (1100),
wherein the current geographic location of the reference location information is evaluated by the UE (1100) at a second current time of the UE (1100).

17. The UE (1100) according to claim 16, wherein
the processor (1110) is further configured to perform:
evaluating the current geographic location of the reference location according to satellite ephemeris information associated with the serving cell of the UE (1100); or
the processor (1110) is further configured to perform:
evaluating the current geographic location of the reference location associated with a first SMTC of the plurality of SMTCs according to satellite ephemeris information associated with the first SMTC; or
the reference location information is further associated with a distance threshold used for the comparison between the current geographic location of the UE (1100) and the reference location information.

18. The UE (1100) according to any one of claims 12-17, wherein the plurality of SMTCs comprised in the measurement configuration is configured as at least one SMTC cluster, each of the at least one SMTC cluster is associated with at least one NTN cell ID.

19. The UE (1100) according to claim 18, wherein each of the at least one SMTC cluster comprises at least one of a SMTC offset, a SMTC periodicity, or a SMTC duration.

20. The UE (1100) according to claim 18, wherein each one NTN cell ID of the at least one NTN cell ID is a Physical Cell Identity, PCI.

21. The UE (1100) according to any one of claims 12-20, wherein the processor (1110) is further configured to perform:
performing cell reselection according to the measurements of cells of the NTN according to the at least one target SMTC.

22. The UE (1100) according to any one of claims 12-21, wherein the processor (1110) is further configured to perform:
receiving, through the transceiver (1130), a System Information broadcast, wherein the System Information broadcast carries the measurement configuration; or
receiving, through the transceiver (1130), a UE specific Radio Resource Control, RRC, message, wherein the UE specific RRC message carries the measurement configuration.
